(19) Europäisches Patentamt
European Patent Office
Office européen des brevets

(11) **EP 3 683 259 B1**

(12) **EUROPEAN PATENT SPECIFICATION**

(45) Date of publication and mention of the grant of the patent:
**08.12.2021 Bulletin 2021/49**

(51) Int Cl.:
***C08L 7/00*** *(2006.01)*   ***B60C 1/00*** *(2006.01)*

(21) Application number: **19217899.4**

(22) Date of filing: **19.12.2019**

(54) **VULCANIZED RUBBER COMPOSITION AND TIRE**

VULKANISIERTE KAUTSCHUKZUSAMMENSETZUNG UND REIFEN

COMPOSITION DE CAOUTCHOUC VULCANISÉ ET PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.01.2019 JP 2019003605**

(43) Date of publication of application:
**22.07.2020 Bulletin 2020/30**

(60) Divisional application:
**21206372.1**

(73) Proprietor: **SUMITOMO RUBBER INDUSTRIES, LTD.**
**Chuo-ku**
**Kobe-shi**
**Hyogo 651-0072 (JP)**

(72) Inventors:
• **SAWAKI, Haruko**
  **Kobe-shi,, Hyogo 651-0072 (JP)**
• **FURUKAWA, Tsuyoshi**
  **Kobe-shi,, Hyogo 651-0072 (JP)**

(74) Representative: **TBK**
**Bavariaring 4-6**
**80336 München (DE)**

(56) References cited:
**US-A1- 2002 169 245**

**Description**

BACKGROUND OF THE INVENTION

Field of the Invention

The present invention relates to a vulcanized rubber composition and a tire.

Description of the Background Art

The rolling resistances of tires have been required to be reduced in consideration of low fuel consumption performance during vehicle running. In addition, wet grip performance (braking performance on a wet road surface) is required to be improved in consideration of safety. However, there is a trade-off relationship between these performance characteristics. As measures taking this trade-off relationship into account, methods for attaining both low rolling resistance performance and wet grip performance by blending silica, have been known (for example, Japanese Laid-Open Patent Publication No. 2011-99080). However, silica has low affinity for rubber components and silica molecules are highly cohesive to one another, and thus methods using silane coupling agents have been employed, but, in such methods, there is a limit to the effect of dispersing rubber components and silica.

Therefore, there is a room left for enhancement of the technology for attaining both low rolling resistance performance and wet grip performance.

SUMMARY OF THE INVENTION

The present invention has been made to solve the aforementioned problems, and an object of the present invention is to provide a vulcanized rubber composition and a pneumatic tire in which the combined performance of low fuel consumption performance and wet grip performance is enhanced.

The present invention is directed to a vulcanized rubber composition containing styrene-butadiene rubber and a resin. An amount of the styrene-butadiene rubber contained in 100% by mass of a rubber component is 10 to 100% by mass, 5 to 200 parts by mass of the resin are contained per 100 parts by mass of the rubber component, and, when transmission measurement by Fourier-transform infrared spectroscopy is performed both before and after acetone extraction, a peak around 1600 cm$^{-1}$ is shifted by not less than 0.6 cm$^{-1}$ between before and after the acetone extraction.

In the measurement, the peak around 1600 cm$^{-1}$ is preferably shifted by not less than 0.7 cm$^{-1}$, and further preferably shifted by not less than 0.8 cm$^{-1}$.

The resin is preferably at least one resin selected from the group consisting of C5 resins, C9 resins, limonene resins, $\alpha$-pinene resins, $\beta$-pinene resins, terpene-phenol resins, dicyclopentadiene resins, styrene resins, $\alpha$-methyl styrene resins, coumarone resins, indene resins, phenol resins, 4-tert-butylstyrene resins, and rosins.

The resin preferably has an aromatic ring.

The rubber composition preferably contains silica.

The present invention is directed also to a tire having a tread in which the rubber composition is used.

The present invention is a vulcanized rubber composition in which the amount of the styrene-butadiene rubber contained in 100% by mass of the rubber component is 10 to 100% by mass, 5 to 200 parts by mass of the resin are contained per 100 parts by mass of the rubber component, and, when transmission measurement by Fourier-transform infrared spectroscopy is performed both before and after acetone extraction, the peak around 1600 cm$^{-1}$ is shifted by not less than 0.6 cm$^{-1}$ between before and after the acetone extraction. Accordingly, the combined performance of low fuel consumption performance and wet grip performance can be enhanced.

DESCRIPTION OF THE PREFERRED EMBODIMENTS

In the vulcanized rubber composition according to the present invention, the amount of styrene-butadiene rubber contained in 100% by mass of a rubber component is 10 to 100% by mass, 5 to 200 parts by mass of a resin is contained per 100 parts by mass of the rubber component, and, when transmission measurement by Fourier-transform infrared spectroscopy is performed both before and after acetone extraction, a peak around 1600 cm$^{-1}$ is shifted by not less than 0.6 cm$^{-1}$ between before and after the acetone extraction. Accordingly, the combined performance of low fuel consumption performance and wet grip performance can be enhanced.

Although the reason why the aforementioned effect is obtained with the vulcanized rubber composition is not fully clarified, the reason is inferred as follows.

The vulcanized rubber composition contains styrene-butadiene rubber (SBR) and a resin, and, when transmission measurement by Fourier-transform infrared spectroscopy is performed both before and after acetone extraction, a peak around 1600 cm$^{-1}$ is shifted by not less than 0.6 cm$^{-1}$ between before and after the acetone extraction.

The peak around 1600 cm$^{-1}$ is a peak that is derived from the aromatic ring of styrene of the SBR. Since the resin dissolves when acetone extraction is performed, the movement of the resin in the vulcanized rubber composition can be analyzed by performing transmission measurement by Fourier-transform infrared spectroscopy before and after acetone extraction. The peak around 1600 cm$^{-1}$ shifting (shifting to the low-wave number side) between before and after the acetone extraction, indicates that the resin and the aromatic ring of styrene of the SBR have interacted with each other, and the electron density in the plane of the aromatic ring (of styrene) of the SBR has decreased. Examples of the interaction between the resin and the SBR include π-π interaction and CH-π interaction, where the molecules of the resin respectively interact with different molecules of the SBR. That is, the peak around 1600 cm$^{-1}$ shifting by not less than 0.6 cm$^{-1}$ when transmission measurement by Fourier-transform infrared spectroscopy is performed both before and after the acetone extraction, means that the molecules of the resin have come between the molecules of the polymer (SBR) (dispersed at the nano level) to cause the interaction, and the molecular mobility of the polymer (SBR) has decreased. Owing to this decrease, wet grip performance can be enhanced.

Meanwhile, when the temperature of the vulcanized rubber composition in which the shift occurs by not less than 0.6 cm$^{-1}$ between before and after the acetone extraction is increased, the molecular motion of the polymer becomes active and dynamic strain increases, and thus the interaction formed by the resin is partially interrupted. As a result, while the resin maintains the interaction with the SBR, the resin functions as a plasticizer, and the resin softens the vulcanized rubber composition, whereby favorable low fuel consumption performance is attained.

As described above, the vulcanized rubber composition contains the SBR and the resin, and, when transmission measurement by Fourier-transform infrared spectroscopy is performed both before and after acetone extraction, the peak around 1600 cm$^{-1}$ is shifted by not less than 0.6 cm$^{-1}$ between before and after the acetone extraction, that is, the SBR and the resin suitably interact with each other, and thus wet grip performance can be enhanced while favorable low fuel consumption performance is maintained or enhanced, and the combined performance of low fuel consumption performance and wet grip performance can be enhanced.

A larger width of the shift of the peak allows more favorable wet grip performance to be attained.

In the present specification, the acetone extraction and the transmission measurement by Fourier-transform infrared spectroscopy (FT-IR) are performed by methods described in EXAMPLES.

In the present specification, the shift of the peak means a shift (change) of the position of a peak top.

In the vulcanized rubber composition, when transmission measurement by Fourier-transform infrared spectroscopy is performed both before and after acetone extraction, the peak around 1600 cm$^{-1}$ is, between before and after the acetone extraction, shifted by not less than 0.6 cm$^{-1}$, preferably shifted by not less than 0.7 cm$^{-1}$, more preferably shifted by not less than 0.8 cm$^{-1}$, more preferably shifted by not less than 0.9 cm$^{-1}$, more preferably shifted by not less than 1.0 cm$^{-1}$, more preferably shifted by not less than 1.1 cm$^{-1}$, more preferably shifted by not less than 1.2 cm$^{-1}$, more preferably shifted by not less than 1.3 cm$^{-1}$, more preferably shifted by not less than 1.4 cm$^{-1}$, more preferably shifted by not less than 1.5 cm$^{-1}$, more preferably shifted by not less than 1.6 cm$^{-1}$, more preferably shifted by not less than 1.7 cm$^{-1}$, and more preferably shifted by not less than 1.8 cm$^{-1}$. Although the upper limit for the width of the shift is not particularly limited since a larger width of the shift of the peak allows more favorable wet grip performance to be attained, the width is preferably not greater than 4.0 cm$^{-1}$, more preferably not greater than 3.8 cm$^{-1}$, further preferably not greater than 3.0 cm$^{-1}$, and particularly preferably not greater than 2.5 cm$^{-1}$. If the width is within the above-described range, the aforementioned effect is more suitably obtained.

The above-described width of the shift is measured by a method described in EXAMPLES.

The shift of the peak can be attained if SBR and a resin having high compatibility with the SBR are used in combination. This is because, if SBR and a resin having high compatibility with the SBR are used in combination, the SBR and the resin suitably interact with each other. Examples of the resin having high compatibility with the SBR include resins having an aromatic ring.

Examples of another means for attaining the shift of the peak include a method in which a resin for causing π-π interaction or CH-π interaction, or a resin having an electron withdrawing group, is blended between SBR and a resin.

Hereinafter, chemicals usable for the vulcanized rubber composition (referred to also as a rubber composition) will be described.

The vulcanized rubber composition contains styrene-butadiene rubber (SBR).

The SBR is not particularly limited, and, for example, SBRs that are generally used in the tire industry such as emulsion-polymerized SBR (E-SBR) and solution-polymerized SBR (S-SBR), can be used. These SBRs can be used singly, and two or more of these SBRs may be used in combination. Among these SBRs, S-SBR is preferable for the reason that the aforementioned combined performance is suitably attained.

The styrene content of the SBR is preferably not less than 10% by mass, more preferably not less than 15% by mass, and further preferably not less than 20% by mass. Meanwhile, the styrene content is preferably not greater than 50% by mass, more preferably not greater than 40% by mass, further preferably not greater than 30% by mass, and particularly preferably not greater than 25% by mass. If the styrene content is within the above-described range, the aforementioned effect tends to be more suitably obtained.

The vinyl content of the SBR is preferably not less than 5% by mass, more preferably not less than 15% by mass, further preferably not less than 30% by mass, particularly preferably not less than 40% by mass, and most preferably not less than 50% by mass. Meanwhile, the vinyl content is preferably not greater than 70% by mass and more preferably not greater than 65% by mass. If the vinyl content is within the above-described range, the aforementioned effect tends to be more suitably obtained.

The SBR may be unmodified SBR or modified SBR.

The modified SBR only has to be an SBR having a functional group that interacts with a filler such as silica. Examples of the modified SBR include an end-modified SBR obtained by modifying at least one end of SBR with a compound (modifier) having the above-described functional group (an end-modified SBR having the above-described functional group at an end thereof), a main chain-modified SBR having the above-described functional group in the main chain thereof, a main chain/end-modified SBR having the above-described functional group in the main chain and at an end thereof (for example, a main chain/end-modified SBR that has the above-described functional group in the main chain thereof and in which at least one end is modified with the above-described modifier), and an end-modified SBR that is modified (coupled) with a polyfunctional compound having two or more epoxy groups in the molecule thereof and to which a hydroxyl group or an epoxy group is introduced. These modified SBRs can be used singly, and two or more of these modified SBRs may be used in combination.

Examples of the above-described functional group include an amino group, an amide group, a silyl group, an alkoxysilyl group, an isocyanate group, an imino group, an imidazole group, a urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxyl group, a nitrile group, a pyridyl group, an alkoxy group, a hydroxyl group, an oxy group, and an epoxy group. These functional groups may have a substituent. Among these functional groups, an amino group (preferably, an amino group obtained by substituting a hydrogen atom of an amino group with an alkyl group having 1 to 6 carbon atoms), an alkoxy group (preferably, an alkoxy group having 1 to 6 carbon atoms), an alkoxysilyl group (preferably, an alkoxysilyl group having 1 to 6 carbon atoms), and an amide group are preferable.

As the SBR, for example, SBRs manufactured by and available from Sumitomo Chemical Co., Ltd., JSR Corporation, Asahi Kasei Corporation, Zeon Corporation, etc., can be used.

The amount of the SBR contained in 100% by mass of the rubber component is not less than 10% by mass, preferably not less than 20% by mass, more preferably not less than 40% by mass, and further preferably not less than 50% by mass, and may be 100% by mass. Meanwhile, the amount is preferably not greater than 90% by mass and more preferably not greater than 80% by mass. If the amount is within the above-described range, the aforementioned effect tends to be more favorably obtained.

Examples of usable rubber components other than the SBR include diene-based rubbers such as isoprene-based rubbers, butadiene rubber (BR), styrene-isoprene-butadiene rubber (SIBR), acrylonitrile-butadiene rubber (NBR), chloroprene rubber (CR), and isobutylene-isoprene rubber (IIR). These rubber components may be used singly, or two or more of these rubber components may be used in combination. Among these diene-based rubbers, isoprene-based rubbers and BR are preferable, and BR is more preferable. If BR having favorable compatibility with the SBR is blended in addition to the SBR, the aforementioned effect is more suitably obtained.

Here, the weight-average molecular weight (Mw) of the rubber component is preferably not less than 150 thousand and more preferably not less than 350 thousand. Although the upper limit for the Mw is not particularly limited, the Mw is preferably not greater than 4 million and more preferably not greater than 3 million.

The amount of the diene-based rubber contained in 100% by mass of the rubber component is preferably not less than 20% by mass, more preferably not less than 50% by mass, further preferably not less than 70% by mass, particularly preferably not less than 80% by mass, and most preferably not less than 90% by mass, and may be 100% by mass. If the amount is within the above-described range, the aforementioned effect tends to be more favorably obtained.

The BR is not particularly limited, and BRs that are generally used in the tire industry can be used. For example, a high-cis BR that has a high cis content, a BR that contains syndiotactic polybutadiene crystal, a BR synthesized using a rare earth-based catalyst (rare earth BR), and the like, can be used. These BRs may be used singly, or two or more of these BRs may be used in combination.

The cis content of the BR is preferably not less than 90% by mass, more preferably not less than 95% by mass, and further preferably not less than 97% by mass. The upper limit for the cis content is not particularly limited, and the cis content may be 100% by mass. If the cis content is within the above-described range, the aforementioned effect tends to be more suitably obtained.

The BR may be either unmodified BR or modified BR. Examples of the modified BR include a modified BR to which the aforementioned functional group is introduced. The preferable mode is the same as that which is explained in the description about the modified SBR.

As the BR, for example, products of Ube Industries, Ltd., JSR Corporation, Asahi Kasei Corporation, Zeon Corporation, etc., can be used.

The amount of the BR contained in 100% by mass of the rubber component is preferably not less than 5% by mass and more preferably not less than 10% by mass. Meanwhile, the amount is preferably not greater than 40% by mass and more preferably not greater than 30% by mass. If the amount is within the above-described range, the aforementioned effect tends to be more favorably obtained.

Examples of the isoprene-based rubbers include natural rubber (NR), isoprene rubber (IR), reformed NR, modified NR, and modified IR. As the NR, for example, NRs that are generally used in the tire industry such as SIR20, RSS#3, and TSR20, can be used. The IR is not particularly limited, and, for example, IRs that are generally used in the tire industry such as IR2200, can be used. Examples of the reformed NR include deproteinized natural rubber (DPNR) and ultra-pure natural rubber (UPNR). Examples of the modified NR include epoxidized natural rubber (ENR), hydrogenated natural rubber (HNR), and grafted natural rubber. Examples of the modified IR include epoxidized isoprene rubber, hydrogenated isoprene rubber, and grafted isoprene rubber. These isoprene-based rubbers may be used singly, or two or more of these isoprene-based rubbers may be used in combination. Among these isoprene-based rubbers, NR is preferable.

The amount of the isoprene-based rubber contained in 100% by mass of the rubber component is preferably not less than 5% by mass and more preferably not less than 10% by mass. Meanwhile, the amount is preferably not greater than 40% by mass and more preferably not greater than 30% by mass. If the amount is within the above-described range, the aforementioned effect tends to be more favorably obtained.

In the present specification, weight-average molecular weight (Mw) and number-average molecular weight (Mn) can be each obtained by converting, based on polystyrene standard, a value measured by gel permeation chromatography (GPC) (GPC-8000 series manufactured by Tosoh Corporation, detector: differential refractometer, column: TSKGEL SUPERMULTIPORE HZ-M manufactured by Tosoh Corporation). Cis content (cis-1,4-bond butadiene unit content) and vinyl content (1,2-bond butadiene unit content) can be each measured by infrared absorption spectrometry, and styrene content can be measured by $^1$H-NMR measurement.

The rubber composition contains a resin. Thus, the aforementioned effect is suitably obtained.

The softening point of the resin is preferably not less than 40°C, more preferably not less than 60°C, and further preferably not less than 75°C. Although the upper limit for the softening point is not particularly limited, the softening point is preferably not greater than 180°C, more preferably not greater than 160°C, further preferably not greater than 140°C, and particularly preferably not greater than 120°C. If the softening point is within the above-described range, the aforementioned effect tends to be more suitably obtained.

The softening point of the resin is a softening point that is measured with a ring and ball softening point measuring device according to JIS K 6220-1: 2001 and is a temperature at which a ball has descended.

The resin is not particularly limited as long as being generally used in the tire industry, and examples of the resin include C5 resins, C9 resins, limonene resins, α-pinene resins, β-pinene resins, terpene-phenol resins, dicyclopentadiene resins (DCPD), styrene resins, α-methylstyrene resins, coumarone resins, indene resins, phenol resins, 4-tert-butylstyrene resins, rosins, p-t-butylphenol acetylene resins, and acrylic-based resins. These resins may be used singly, or two or more of these resins may be used in combination. In the present specification, the resin means a polymer that is in solid form at normal temperature (25°C).

Here, for example, an α-methylstyrene resin is a resin that contains α-methylstyrene as a main monomer component forming the backbone (main chain) of the resin, and may contain another monomer component. The same applies to the other resins.

Among these resins, at least one resin selected from the group consisting of C5 resins, C9 resins, limonene resins, α-pinene resins, β-pinene resins, terpene-phenol resins, dicyclopentadiene resins, styrene resins, α-methylstyrene resins, coumarone resins, indene resins, phenol resins, 4-tert-butylstyrene resins, and rosins, is preferable, and at least one resin selected from the group consisting of C9 resins, limonene resins, α-pinene resins, β-pinene resins, terpene-phenol resins, dicyclopentadiene resins, styrene resins, α-methylstyrene resins, coumarone resins, indene resins, phenol resins, 4-tert-butylstyrene resins, and rosins, is more preferable.

In addition, a resin having an aromatic ring which is a resin having high compatibility with the SBR, is preferable as described above. Examples of the resin having an aromatic ring include C9 resins, limonene resins, α-pinene resins, β-pinene resins, terpene-phenol resins, dicyclopentadiene resins, styrene resins, α-methylstyrene resins, coumarone resins, indene resins, phenol resins, 4-tert-butylstyrene resins, rosins, and p-t-butylphenol acetylene resins. These resins may be used singly, or two or more of these resins may be used in combination. Among these resins, C9 resins, terpene-phenol resins, styrene resins, α-methyl styrene resins, coumarone resins, indene resins, phenol resins, 4-tert-butylstyrene resins are preferable, α-methylstyrene resins, terpene-phenol resins, styrene resins, 4-tert-butylstyrene resins are more preferable, and α-methylstyrene resins are further preferable.

In addition, a plurality of the resins each having an aromatic ring are preferably used in combination. Specifically, an α-methylstyrene resin, a terpene-phenol resin, a styrene resin, and a 4-tert-butylstyrene resin are preferably used in combination.

As the resin, for example, products of Maruzen Petrochemical Co., Ltd., Sumitomo Bakelite Co., Ltd., YASUHARA CHEMICAL CO., LTD., Tosoh Corporation, Rutgers Chemicals AG, BASF, Arizona Chemical Company, NITTO CHEMICAL CO., LTD., NIPPON SHOKUBAI CO., LTD., JXTG Nippon Oil & Energy Corporation, Arakawa Chemical Industries, Ltd., Taoka Chemical Co., Ltd., TOAGOSEI CO., LTD., Kraton Corporation, etc., can be used.

The amount of the resin contained per 100 parts by mass of the rubber component is not less than 5 parts by mass, preferably not less than 10 parts by mass, more preferably not less than 20 parts by mass, further preferably not less than 30 parts by mass, particularly preferably not less than 35 parts by mass, and most preferably not less than 40 parts by mass. Meanwhile, the amount is not greater than 200 parts by mass, preferably not greater than 150 parts by mass, more preferably not greater than 120 parts by mass, and further preferably not greater than 100 parts by mass. If the amount is within the above-described range, the aforementioned effect tends to be more favorably obtained.

The rubber composition preferably contains carbon black.

The carbon black is not particularly limited, and examples thereof include N134, N110, N220, N234, N219, N339, N330, N326, N351, N550, and N762. These carbon blacks may be used singly, or two or more of these carbon blacks may be used in combination.

The nitrogen adsorption specific surface area ($N_2SA$) of the carbon black is preferably not less than 80 $m^2/g$ and more preferably not less than 100 $m^2/g$. Meanwhile, the $N_2SA$ is preferably not greater than 200 $m^2/g$, more preferably not greater than 150 $m^2/g$, and further preferably not greater than 125 $m^2/g$. If the $N_2SA$ is within the above-described range, the aforementioned effect tends to be more favorably obtained.

In the present specification, the $N_2SA$ of the carbon black is a value that is measured according to JIS K 6217-2: 2001.

As the carbon black, for example, products of Asahi Carbon Co., Ltd., Cabot Japan K.K., Tokai Carbon Co., Ltd., Mitsubishi Chemical Corporation, Lion Corporation, NIPPON STEEL Carbon Co., Ltd., Columbia Carbon Co., etc., can be used.

The amount of the carbon black contained per 100 parts by mass of the rubber component is preferably not less than 3 parts by mass, more preferably not less than 5 parts by mass, and further preferably not less than 8 parts by mass. Meanwhile, the amount is preferably not greater than 80 parts by mass, more preferably not greater than 50 parts by mass, further preferably not greater than 30 parts by mass, particularly preferably not greater than 20 parts by mass, and most preferably not greater than 10 parts by mass. If the amount is within the above-described range, the aforementioned effect tends to be more favorably obtained.

The rubber composition preferably contains silica.

Examples of the silica include dry-process silica (silicic anhydride) and wet-process silica (hydrous silicic acid), and wet-process silica is preferable because of a higher silanol group content thereof. These silicas can be used singly, and two or more of these silicas may be used in combination.

The nitrogen adsorption specific surface area ($N_2SA$) of the silica is not less than 40 $m^2/g$, preferably not less than 70 $m^2/g$, more preferably not less than 80 $m^2/g$, further preferably not less than 140 $m^2/g$, and particularly preferably not less than 160 $m^2/g$. Meanwhile, the $N_2SA$ is preferably not greater than 600 $m^2/g$, more preferably not greater than 300 $m^2/g$, further preferably not greater than 250 $m^2/g$, and particularly preferably not greater than 200 $m^2/g$. If the $N_2SA$ is within the above-described range, the aforementioned effect tends to be more suitably obtained.

The $N_2SA$ of the silica is a value that is measured by the BET method according to ASTM D3037-81.

As the silica, for example, products of Degussa, Rhodia, Tosoh Silica Corporation, Solvay Japan, Ltd., Tokuyama Corporation, etc., can be used.

The amount of the silica contained per 100 parts by mass of the rubber component is preferably not less than 5 parts by mass, more preferably not less than 10 parts by mass, further preferably not less than 20 parts by mass, particularly preferably not less than 40 parts by mass, and most preferably not less than 60 parts by mass. Meanwhile, the amount is preferably not greater than 150 parts by mass, more preferably not greater than 120 parts by mass, and further preferably not greater than 100 parts by mass. If the amount is within the above-described range, the aforementioned effect tends to be more favorably obtained.

In the rubber composition, the amount of the silica contained in 100% by mass of the filler (reinforcing filler) is preferably not less than 30% by mass, more preferably not less than 50% by mass, further preferably not less than 70% by mass, and particularly preferably not less than 85% by mass, and may be 100% by mass. If the amount is within the above-described range, the aforementioned effect tends to be more suitably obtained.

In a case where the rubber composition contains silica, the rubber composition preferably further contains a silane coupling agent.

The silane coupling agent is not particularly limited, and examples thereof include: sulfide-based silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilyl ethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyl tetrasulfide, 2-triethoxysilyl ethyl-N,N-dimethylthiocarbamoyl tetrasulfide, 3-triethoxysilylpropyl methacrylate monosulfide; mercapto-based silane coupling agents such as 3-mercaptopropyltrimethoxysilane and 2-mercaptoethyltriethoxysilane; vinyl-based silane coupling agents such as vinyltriethoxysilane and vinyltrimethoxysilane; amino-based silane coupling agents such as 3-aminopropyltriethoxysilane and 3-aminopropyltrimethoxysilane; glycidoxy-based silane coupling agents such as γ-glycidoxypropyltriethoxysilane and γ-glycidoxypropyltrimethoxysilane; nitro-based silane coupling agents such as 3-nitropropyltrimethoxysilane and 3-nitropropyltriethoxysilane; and chloro-based silane coupling agents such as 3-chloropropyltrimethoxysilane and 3-chloropropyltriethoxysilane. As commercially available silane coupling agents, for example, products of Degussa, Momentive, Shin-Etsu Silicones, Tokyo Chemical Industry Co., Ltd., AZmax, Dow Corning Toray Co., Ltd., etc., can be used. These silane coupling agents may be used singly, or two or more of these silane coupling agents may be used in combination. Among these silane coupling agents, sulfide-based silane coupling agents are preferable and disulfide-based silane coupling agents having disulfide bonds such as bis(3-triethoxysilylpropyl)disulfide are more preferable, in that the aforementioned effect tends to be more favorably obtained.

The amount of the silane coupling agent contained per 100 parts by mass of the silica is preferably not less than 3 parts by mass and more preferably not less than 6 parts by mass. Meanwhile, the amount is preferably not greater than 20 parts by mass, more preferably not greater than 15 parts by mass, and further preferably not greater than 10 parts by mass. If the amount is within the above-described range, the aforementioned effect tends to be more favorably obtained.

The rubber composition may contain a softener.

The softener is not particularly limited, and examples thereof include oils and liquid diene-based polymers. These softeners may be used singly, or two or more of these softeners may be used in combination.

Examples of the oils include process oils, vegetable fats and oils, and mixtures thereof. As the process oils, for example, paraffinic process oil, aromatic process oil, naphthenic process oil, and the like can be used. Examples of the vegetable fats and oils include castor oil, cotton seed oil, linseed oil, rapeseed oil, soybean oil, palm oil, coconut oil, peanut oil, rosin, pine oil, pine tar, tall oil, corn oil, rice bran oil, safflower oil, sesame oil, olive oil, sunflower oil, palm kernel oil, camellia oil, jojoba oil, macadamia nut oil, and tung oil. These oils may be used singly, or two or more of these oils may be used in combination. Among these oils, process oils are preferable and paraffinic process oil is more preferable, for the reason that the aforementioned effect is favorably obtained.

As the oil, for example, products of Idemitsu Kosan Co., Ltd., Sankyo Yuka Kogyo K.K., JXTG Nippon Oil & Energy Corporation, Olisoy, H&R, HOKOKU Co., Ltd., SHOWA SHELL SEKIYU K. K., FUJI KOSAN COMPANY, LTD., etc., can be used.

The liquid diene-based polymer refers to a diene-based polymer that is in liquid form at normal temperature (25°C).

The weight-average molecular weight (Mw) of the liquid diene-based polymer is preferably not less than $3.0 \times 10^3$ and more preferably not less than $4.0 \times 10^3$. Meanwhile, the Mw is preferably not greater than $1.0 \times 10^5$ and more preferably not greater than $1.5 \times 10^4$. If the Mw is within the above-described range, the aforementioned effect is more suitably obtained.

Examples of the liquid diene-based polymer include liquid styrene-butadiene copolymers (liquid SBRs), liquid butadiene polymers (liquid BRs), liquid isoprene polymers (liquid IRs), and liquid styrene-isoprene copolymers (liquid SIRs). These liquid diene-based polymers may be used singly, or two or more of these liquid diene-based polymers may be used in combination. Among these liquid diene-based polymers, liquid SBRs are preferable for the reason that the aforementioned effect is more suitably obtained.

The styrene content of the liquid SBR is preferably not less than 10% by mass, more preferably not less than 20% by mass, and further preferably not less than 30% by mass. Meanwhile, the styrene content is preferably not greater than 55% by mass and more preferably not greater than 50% by mass. If the styrene content is within the above-described range, the aforementioned effect is more suitably obtained.

As the liquid diene-based polymer, for example, products of Sartomer, KURARAY CO., LTD., etc., can be used.

The amount of the softener contained per 100 parts by mass of the rubber component is preferably not less than 5 parts by mass and more preferably not less than 10 parts by mass. Meanwhile, the amount is preferably not greater than 40 parts by mass, more preferably not greater than 30 parts by mass, and further preferably not greater than 20 parts by mass. If the amount is within the above-described range, the aforementioned effect tends to be more favorably obtained. In the present specification, the amount of the softener includes the amount of oil contained in rubber (oil-extended rubber).

The total amount of the resin and the softener contained is preferably the same as the above-described amount of the resin in the case where the resin is used alone.

The rubber composition preferably contains sulfur as a crosslinking agent (vulcanizing agent).

Examples of the sulfur include powdery sulfur, precipitated sulfur, colloidal sulfur, insoluble sulfur, highly dispersible sulfur, and soluble sulfur, which are generally used in the rubber industry. These sulfurs may be used singly, or two or more of these sulfurs may be used in combination.

As the sulfur, for example, products of Tsurumi Chemical Industry Co., Ltd., Karuizawa Sulfur Co, Ltd., SHIKOKU CHEMICALS CORPORATION, Flexsys, Nippon Kanryu Industry Co., Ltd., Hosoi Chemical Industry Co., Ltd., etc., can be used.

The amount of the sulfur contained per 100 parts by mass of the rubber component is preferably not less than 0.1 parts by mass, more preferably not less than 0.2 parts by mass, further preferably not less than 0.3 parts by mass, and particularly preferably not less than 0.5 parts by mass. Meanwhile, the amount is preferably not greater than 5 parts by mass, more preferably not greater than 3 parts by mass, further preferably not greater than 2 parts by mass, and particularly preferably not greater than 1.5 parts by mass. If the amount is within the above-described range, the aforementioned effect tends to be more favorably obtained.

The rubber composition preferably contains a vulcanization accelerator.

Examples of the vulcanization accelerator include: thiazole-based vulcanization accelerators such as 2-mercaptobenzothiazole, di-2-benzothiazolyl disulfide, and N-cyclohexyl-2-benzothiazyl sulfenamide; thiuram-based vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide-based vulcanization accelerators such as N-cyclohexyl-2-benzothiazolesulfenamide, N-t-butyl-2-benzothiazolyl sulfenamide, N-oxyethylene-2-benzothiazolesulfenamide, and N,N'-diisopropyl-2-benzothiazolesulfenamide; and guanidine-based vulcanization accelerators such as diphenylguanidine, diorthotolylguanidine, and orthotolylbiguanidine. These vulcanization accelerators may be used singly, or two or more of these vulcanization accelerators may be used in combination. Among these vulcanization accelerators, sulfenamide-based vulcanization accelerators and guanidine-based vulcanization accelerators are preferable, and sulfenamide-based vulcanization accelerators are more preferable.

As the vulcanization accelerator, for example, products manufactured by Kawaguchi Chemical Industry Co., LTD., OUCHI SHINKO CHEMICAL INDUSTRIAL CO., LTD., Rhein Chemie Corporation, etc., can be used.

The amount of the vulcanization accelerator contained per 100 parts by mass of the rubber component is preferably not less than 0.5 parts by mass and more preferably not less than 1 part by mass. Meanwhile, the amount is preferably not greater than 10 parts by mass and more preferably not greater than 5 parts by mass. If the amount is within the above-described range, the aforementioned effect tends to be more favorably obtained.

The rubber composition may contain wax.

The wax is not particularly limited, and examples thereof include petroleum-based waxes such as paraffin wax and microcrystalline wax; natural waxes such as vegetable wax and animal wax; and synthetic waxes such as polymers of ethylene, propylene, and the like. These waxes can be used singly, and two or more of these waxes may be used in combination. Among these waxes, petroleum-based waxes are preferable, and paraffin wax is more preferable.

As the wax, for example, products of OUCHI SHINKO CHEMICAL INDUSTRIAL CO., LTD., NIPPON SEIRO CO., LTD., Seiko Chemical Co., Ltd., etc., can be used.

The amount of the wax contained per 100 parts by mass of the rubber component is preferably not less than 0.3 parts by mass and more preferably not less than 0.5 parts by mass. Meanwhile, the amount is preferably not greater than 20 parts by mass and more preferably not greater than 10 parts by mass. If the amount is within the above-described range, the aforementioned effect tends to be more favorably obtained.

The rubber composition may contain an antioxidant.

Examples of the antioxidant include: naphthylamine-based antioxidants such as phenyl-a-naphthylamine; diphenylamine-based antioxidants such as octylated diphenylamine and 4,4'-bis($\alpha,\alpha$'-dimethylbenzyl)diphenylamine; p-phenylenediamine-based antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline-based antioxidants such as polymers of 2,2,4-trimethyl-1,2-dihydroquinoline; monophenol-based antioxidants such as 2,6-di-t-butyl-4-methylphenol and styrenated phenol; and bis-, tris-, and poly-phenol-based antioxidants such as tetrakis-[methylene-3-(3',5'-di-t-butyl-4'-hydroxyphenyl)propionate]methane. These antioxidants can be used singly, and two or more of these antioxidants may be used in combination. Among these antioxidants, p-phenylenediamine-based antioxidants are preferable.

As the antioxidant, for example, products of Seiko Chemical Co., Ltd., Sumitomo Chemical Co., Ltd., OUCHI SHINKO CHEMICAL INDUSTRIAL CO., LTD., Flexsys, etc., can be used.

The amount of the antioxidant contained per 100 parts by mass of the rubber component is preferably not less than 0.5 parts by mass and more preferably not less than 1 part by mass. Meanwhile, the amount is preferably not greater than 10 parts by mass and more preferably not greater than 5 parts by mass. If the amount is within the above-described range, the aforementioned effect tends to be more favorably obtained.

The rubber composition may contain stearic acid.

As the stearic acid, conventionally known stearic acids can be used. For example, products of NOF CORPORATION, Kao Corporation, FUJIFILM Wako Pure Chemical Corporation, New Japan Chemical Co., Ltd., etc., can be used.

The amount of the stearic acid contained per 100 parts by mass of the rubber component is preferably not less than 0.5 parts by mass and more preferably not less than 1 part by mass. Meanwhile, the amount is preferably not greater than 10 parts by mass and more preferably not greater than 5 parts by mass. If the amount is within the above-described range, the aforementioned effect tends to be more favorably obtained.

The rubber composition may contain zinc oxide.

As the zinc oxide, conventionally known zinc oxides can be used. For example, products of MITSUI MINING & SMELTING CO., LTD., TOHO ZINC CO., LTD., HAKUSUI TECH CO., LTD., SEIDO CHEMICAL INDUSTRY CO., LTD., SAKAI CHEMICAL INDUSTRY CO., LTD., etc., can be used.

The amount of the zinc oxide contained per 100 parts by mass of the rubber component is preferably not less than 0.5 parts by mass and more preferably not less than 1 part by mass. Meanwhile, the amount is preferably not greater than 10 parts by mass and more preferably not greater than 5 parts by mass. If the amount is within the above-described range, the aforementioned effect tends to be more favorably obtained.

In addition to the aforementioned components, additives generally used in the tire industry may be further blended in the rubber composition, and examples of the additives include: organic peroxides; and fillers such as calcium carbonate, talc, alumina, clay, aluminum hydroxide, and mica. The total amount of these additives contained per 100 parts by mass of the rubber component is preferably 0.1 to 200 parts by mass.

The rubber composition can be produced by, for example, a method in which the aforementioned components are kneaded using a rubber kneading device such as an open roll or a Banbury mixer, and then vulcanization is performed.

The kneading conditions are as follows: in a base kneading step of kneading the additives other than the vulcanizing agent and the vulcanization accelerator, the kneading temperature is normally 100 to 180°C and preferably 120 to 170°C, and, in a finish kneading step of kneading the vulcanizing agent and the vulcanization accelerator, the kneading temperature is normally not greater than 120°C and preferably 80 to 110°C. In addition, a composition obtained by kneading the vulcanizing agent and the vulcanization accelerator is normally subjected to vulcanization processing such as press-vulcanization. The vulcanization temperature is normally 140 to 190°C and preferably 150 to 185°C. The vulcanization time is normally 5 to 15 minutes.

The rubber composition can be used (as a rubber composition for tires) for tire members such as treads (cap treads), sidewalls, base treads, under treads, clinches, bead apexes, breaker cushion rubbers, carcass cord-covering rubbers, insulations, chafers, inner liners, etc., and side reinforcing layers of run flat tires, for example. The rubber composition is suitably used for treads among these tire members.

A tire (pneumatic tire or the like) according to the present invention is manufactured using the rubber composition by a general method. Specifically, the rubber composition obtained by blending the various additives as necessary is extruded in an unvulcanized state into the shape of each member (in particular, a tread (cap tread)) of a tire, shaped on a tire-shaping machine by a general method, and attached together with other tire members, thereby forming an unvulcanized tire. Thereafter, the unvulcanized tire is heated and pressurized in a vulcanizing machine, whereby a tire can be manufactured.

The tire is suitably used as a tire for passenger cars, a tire for large-sized passenger cars, a tire for large-sized SUVs, a tire for trucks or buses, a tire for two-wheeled automotive vehicles, a tire for racing, a studless tire (tire for winter), a tire for all seasons, a run flat tire, an aircraft tire, a tire for mines, or the like.

EXAMPLES

The present invention will be specifically described by means of Examples. However, the present invention is not limited to these Examples.

Hereinafter, various chemicals used in Examples and Comparative Examples will be described collectively.

SBR: Nipol NS116 (S-SBR, vinyl content: 60% by mass, styrene content: 20% by mass) manufactured by Zeon Corporation
BR: BR150B (cis content: 97% by mass) manufactured by Ube Industries, Ltd.
NR: TSR20 (natural rubber)
Carbon black: SEAST I (N220, $N_2SA$: 114 m$^2$/g) manufactured by Mitsubishi Chemical Corporation
Silica: ULTRASIL VN3 ($N_2SA$: 175 m$^2$/g) manufactured by Evonik Degussa GmbH
Silane coupling agent: Si266 (bis(3-triethoxysilylpropyl)disulfide) manufactured by Evonik Degussa GmbH
Wax: OZOACE wax manufactured by NIPPON SEIRO CO., LTD.
Antioxidant: NOCRAC 6C (N-(1,3-dimethylbutyl)-N'-phenyl-p-phenylenediamine) manufactured by OUCHI SHINKO CHEMICAL INDUSTRIAL CO., LTD.
Oil: PS-32 (paraffinic process oil) manufactured by Idemitsu Kosan Co., Ltd.
Resin (1): Sylvatraxx 4401 (an α-methylstyrene resin, softening point: 85°C) manufactured by Kraton Corporation
Resin (2): Quintone A100 (a C5 resin, softening point: 100°C) manufactured by Zeon Corporation
Resin (3): SX100 (a styrene resin, softening point: 100°C) manufactured by YASUHARA CHEMICAL CO., LTD.
Resin (4): T100 (a terpene-phenol resin, softening point: 100°C) manufactured by YASUHARA CHEMICAL CO., LTD.

Resin (5): A resin (a 4-tert-butylstyrene resin, softening point: 130°C) synthesized according to a production example described below

Stearic acid: Stearic acid "Tsubaki" manufactured by NOF CORPORATION

Zinc oxide: Zinc Oxide II manufactured by MITSUI MINING & SMELTING CO., LTD.

Sulfur: Powdery sulfur (containing 5% of oil) manufactured by Tsurumi Chemical Industry Co., Ltd.

Vulcanization accelerator: NOCCELER NS (N-tert-butyl-2-benzothiazolyl sulfenamide) manufactured by OUCHI SHINKO CHEMICAL INDUSTRIAL CO., LTD.

(Production Example) [Preparation of Resin (5)]

A stirring device, a thermometer, and a reflux condenser tube were set with respect to a 1-L four-necked flask, and 150.0 g of 4-tert-butylstyrene (manufactured by FUJIFILM Wako Pure Chemical Corporation) and 375 ml of toluene (manufactured by KANTO CHEMICAL CO., INC.) were poured as reaction mixture solutions into the four-necked flask and stirred sufficiently. Thereafter, the uniformly dispersed reaction mixture solutions were cooled in ice to 2°C. Meanwhile, 1.5 g of a boron trifluoride phenol complex and 3.0 g of toluene were poured as catalysts into a dropping funnel, and the dropping funnel was set with respect to the four-necked flask.

Then, while the temperature was maintained at 3 to 5°C, the catalysts were dropped into the four-necked flask over 15 minutes to initiate a polymerization reaction. After the catalysts were finished being dropped, the reaction mixture solutions and the catalysts were further stirred for 30 minutes while the temperature was maintained at 3 to 5°C. The reaction solution obtained at the end of the polymerization reaction was cleaned with a 0.5-N sodium hydroxide aqueous solution, cleaned with water in succession, and then dehydrated with anhydrous sodium sulfate. The reaction solution was kept being dropped for 30 minutes into 1200 g of ethanol having been prepared in advance, to form powder in the form of a precipitate. The solution was filtered to obtain the powder, and the powder was cleaned with 300 g of ethanol and then dried under reduced pressure, thereby obtaining a 4-tert-butylstyrene resin in a yield of 58 g. The softening point of the obtained resin was 130°C.

(Examples and Comparative Examples)

Based on each of the blending formulas indicated in Table 1, the chemicals other than the sulfur and the vulcanization accelerator were kneaded for four minutes under a condition of 150°C using a 1.7-L Banbury mixer manufactured by Kobe Steel, Ltd., thereby obtaining a kneaded product. Then, the sulfur and the vulcanization accelerator were added to the obtained kneaded product, and the mixture was kneaded for four minutes under a condition of 80°C using an open roll, thereby obtaining an unvulcanized rubber composition. Next, the obtained unvulcanized rubber composition was press-vulcanized for 12 minutes at 170°C using a die that had a thickness of 0.5 mm, thereby obtaining a vulcanized rubber composition.

Meanwhile, the obtained unvulcanized rubber composition was extruded into the shape of a cap tread and attached together with other tire members on the tire-shaping machine, thereby forming an unvulcanized tire. The unvulcanized tire was press-vulcanized for 12 minutes under a condition of 170°C, thereby obtaining a test tire (tire size: 195/65R15).

The following evaluations were conducted on the obtained vulcanized rubber compositions (not having yet been subjected to acetone extraction) and the obtained test tires. The results are indicated in Table 1.

<Rolling Resistance>

Running with each test tire was performed under a condition of a rim ($15 \times 6JJ$), an internal pressure (230 kPa), a load (3.43 kN), and a speed (80 km/h), and the rolling resistance of the test tire during the running was measured using a rolling resistance testing machine. The result is indicated as an index with the result of Comparative Example 1 being regarded as 100. A higher index indicates better low fuel consumption performance. When the index was not less than 95, the low fuel consumption performance was determined as favorable.

<Wet Grip Performance Test>

The test tires were mounted to all wheels of a vehicle (front wheel drive vehicle with an engine displacement of 2000 cc manufactured in Japan), and the braking distance from an initial speed of 100 km/h was measured on a wet road surface. Each result was calculated with the following expression and is indicated as an index with the result of Comparative Example 1 being regarded as 100. A higher index indicates better wet grip performance.

$$\text{(Wet grip performance index)} = \text{(braking distance of Comparative Example 1)}/\text{(braking distance of each Example)} \times 100$$

<Transmission Measurement by Fourier-Transform Infrared Spectroscopy>

Each vulcanized rubber composition (not having yet been subjected to acetone extraction; with a rectangular parallelepiped shape and a size of 0.5 mm × 10 mm × 50 mm) was immersed in 100 ml of acetone for 24 hours at 25°C, thereby obtaining a vulcanized rubber composition having been subjected to acetone extraction.

Then, the vulcanized rubber composition (not having yet been subjected to acetone extraction) and the vulcanized rubber composition having been subjected to acetone extraction, were cut into samples each having a thickness of 10 μm, using a cryostat of CM3050S manufactured by Leica. Transmission measurement by Fourier-transform infrared spectroscopy was performed on these samples under the conditions described below. The measurement results of both samples were compared with each other in terms of the position of a peak around 1600 cm$^{-1}$, thereby calculating the width of the shift (variation width) of the peak around 1600 cm$^{-1}$ between before and after the acetone extraction.

(Conditions of Performing Transmission Measurement by Fourier-Transform Infrared Spectroscopy)

"Spectrum one" manufactured by PerkinElmer Co., Ltd. was used.

Mode: transmission measurement
Number of times of integration: 16 times
Temperature: 25°C

[Table 1]

| | | Example 1 | Example 2 | Example 3 | Example 4 | Example 5 | Example 6 | Example 7 | Example 8 | Example 9 | Example 10 | Example 11 | Example 12 | Example 13 | Example 14 | Comparative Example 1 | Comparative Example 2 | Comparative Example 3 |
|---|---|---|---|---|---|---|---|---|---|---|---|---|---|---|---|---|---|---|
| Blended amount (parts by mass) | SBR | 100 | 100 | 100 | 100 | 100 | 100 | 100 | 100 | 100 | 100 | 100 | 80 | 60 | 100 | 100 | 100 | 80 |
| | BR | | | | | | | | | | | | 20 | 20 | | | | 20 |
| | NR | | | | | | | | | | | | | 20 | | | | |
| | Carbon black | 10 | 10 | 10 | 10 | 10 | 10 | 10 | 10 | 10 | 10 | 10 | 10 | 10 | 10 | 10 | 10 | 10 |
| | Silica | 80 | 80 | 80 | 80 | 80 | 80 | 80 | 80 | 80 | 80 | 80 | 80 | 80 | 80 | 80 | 80 | 80 |
| | Silane coupling agent | 8 | 8 | 8 | 8 | 8 | 8 | 8 | 8 | 8 | 8 | 8 | 8 | 8 | 8 | 8 | 8 | 8 |
| | Wax | 1 | 1 | 1 | 1 | 1 | 1 | 1 | 1 | 1 | 1 | 1 | 1 | 1 | 1 | 1 | 1 | 1 |
| | Antioxidant | 2 | 2 | 2 | 2 | 2 | 2 | 2 | 2 | 2 | 2 | 2 | 2 | 2 | 2 | 2 | 2 | 2 |
| | Oil | | | | | | | | | | | | | 10 | | 40 | | |
| | Resin (1) (α-methylstyrene resin) | 40 | 50 | 60 | 100 | 200 | | | | | | | 100 | 100 | 25 | | 40 | 40 |
| | Resin (2) (C5 resin) | | | | | | 40 | | | 80 | | | | | | | | |
| | Resin (3) (styrene resin) | | | | | | | 40 | | | 80 | | | | 25 | | | |
| | Resin (4) (terpene-phenol resin) | | | | | | | | 40 | | | 80 | | | | | | |
| | Resin (5) (4-tert-butylstyrene resin) | | | | | | | | | | | | | | 25 | | | |
| | Stearic acid | 1 | 1 | 1 | 1 | 1 | 1 | 1 | 1 | 1 | 1 | 1 | 1 | 1 | 1 | 1 | 1 | 1 |
| | Zinc oxide | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| | Sulfur | 1 | 1 | 1 | 1 | 1 | 1 | 1 | 1 | 1 | 1 | 1 | 1 | 1 | 1 | 1 | 1 | 1 |
| | Vulcanization accelerator | 2 | 2 | 2 | 2 | 2 | 2 | 2 | 2 | 2 | 2 | 2 | 2 | 2 | 2 | 2 | 2 | 2 |
| Result of evaluation | Low fuel consumption performance | 105 | 103 | 100 | 98 | 95 | 100 | 99 | 100 | 99 | 97 | 99 | 99 | 98 | 103 | 100 | 95 | 86 |
| | Wet grip performance | 120 | 122 | 125 | 130 | 145 | 116 | 118 | 119 | 125 | 130 | 135 | 135 | 138 | 150 | 100 | 102 | 105 |
| | Shift of peak between before and after acetone extraction | 0.7 | 0.9 | 1.0 | 1.5 | 2.8 | 0.6 | 0.7 | 0.7 | 1.0 | 1.2 | 1.3 | 1.6 | 1.7 | 2.0 | 0 | 0 | 0 |

From Table 1, it has been found that the Examples allow enhancement in the combined performance of low fuel consumption performance and wet grip performance (the total value of both indexes of low fuel consumption performance and wet grip performance). In each of the Examples, the amount of the styrene-butadiene rubber contained in 100% by mass of the rubber component was 10 to 100% by mass, and 5 to 200 parts by mass of any of the resins were contained per 100 parts by mass of the rubber component, and, when transmission measurement by Fourier-transform infrared spectroscopy was performed both before and after acetone extraction, the peak around 1600 cm$^{-1}$ was shifted by not less than 0.6 cm$^{-1}$ between before and after the acetone extraction.

Provided are a vulcanized rubber composition and a pneumatic tire in which the combined performance of low fuel consumption performance and wet grip performance is enhanced. In the vulcanized rubber composition, the amount of styrene-butadiene rubber contained in 100% by mass of a rubber component is 10 to 100% by mass, 5 to 200 parts by mass of a resin is contained per 100 parts by mass of the rubber component, and, when transmission measurement by Fourier-transform infrared spectroscopy is performed both before and after acetone extraction, a peak around 1600 cm$^{-1}$ is shifted by not less than 0.6 cm$^{-1}$ between before and after the acetone extraction.

**Claims**

1. A vulcanized rubber composition containing styrene-butadiene rubber and a resin, wherein

   an amount of the styrene-butadiene rubber contained in 100% by mass of a rubber component is 10 to 100% by mass,
   5 to 200 parts by mass of the resin are contained per 100 parts by mass of the rubber component, and,
   when transmission measurement by Fourier-transform infrared spectroscopy is performed both before and after acetone extraction, a peak around 1600 cm$^{-1}$ is shifted by not less than 0.6 cm$^{-1}$ between before and after the acetone extraction.

2. The vulcanized rubber composition according to claim 1, wherein, in the measurement, the peak around 1600 cm$^{-1}$ is shifted by not less than 0.7 cm$^{-1}$.

3. The vulcanized rubber composition according to claim 1, wherein, in the measurement, the peak around 1600 cm$^{-1}$ is shifted by not less than 0.8 cm$^{-1}$.

4. The vulcanized rubber composition according to any one of claims 1 to 3, wherein the styrene-butadiene rubber is a modified styrene-butadiene rubber.

5. The vulcanized rubber composition according to any one of claims 1 to 4, wherein the vulcanized rubber composition further contains one, two or more rubber components other than styrene-butadiene rubber and being selected from the group consisting of isoprene-based rubbers, butadiene rubber (BR), styrene-isoprene-butadiene rubber (SIBR), acrylonitrile-butadiene rubber (NBR), chloroprene rubber (CR), and isobutylene-isoprene rubber (IIR).

6. The vulcanized rubber composition according to any one of claims 1 to 5, wherein
   the resin is at least one resin selected from the group consisting of C5 resins, C9 resins, limonene resins, $\alpha$-pinene resins, $\beta$-pinene resins, terpene-phenol resins, dicyclopentadiene resins, styrene resins, $\alpha$-methylstyrene resins, coumarone resins, indene resins, phenol resins, 4-tert-butylstyrene resins, and rosins.

7. The vulcanized rubber composition according to any one of claims 1 to 5, wherein
   the resin has an aromatic ring.

8. The vulcanized rubber composition according to any one of claims 1 to 7, wherein
   the vulcanized rubber composition further contains silica.

9. A tire having a tread in which the vulcanized rubber composition according to any one of claims 1 to 8 is used.

**Patentansprüche**

1. Vulkanisierte Kautschukzusammensetzung, die Styrol-Butadien-Kautschuk und ein Harz enthält, wobei

eine Menge des Styrol-Butadien-Kautschuks, die in 100 Masse-% einer Kautschukkomponente enthalten ist, 10 bis 100 Masse-% beträgt,

5 bis 200 Masseteile des Harzes pro 100 Masseteile der Kautschukkomponente enthalten sind, und,

wenn eine Transmissionsmessung mittels Fourier-Transform-Infrarotspektroskopie sowohl vor als auch nach einer Acetonextraktion durchgeführt wird, dann ist ein Peak in der Umgebung von 1600 cm$^{-1}$ um nicht weniger als 0,6 cm$^{-1}$ zwischen vor und nach der Acetonextraktion verschoben ist.

2. Vulkanisierte Kautschukzusammensetzung nach Anspruch 1, wobei bei der Messung der Peak in der Umgebung von 1600 cm$^{-1}$ um nicht weniger als 0,7 cm$^{-1}$ verschoben ist.

3. Vulkanisierte Kautschukzusammensetzung nach Anspruch 1, wobei bei der Messung der Peak in der Umgebung von 1600 cm$^{-1}$ um nicht weniger als 0,8 cm$^{-1}$ verschoben ist.

4. Vulkanisierte Kautschukzusammensetzung nach einem der Ansprüche 1 bis 3, wobei der Styrol-Butadien-Kautschuk ein modifizierter Styrol-Butadien-Kautschuk ist.

5. Vulkanisierte Kautschukzusammensetzung nach einem der Ansprüche 1 bis 4, wobei die vulkanisierte Kautschukzusammensetzung ferner eine, zwei oder mehrere andere Kautschukkomponenten als Styrol-Butadien-Kautschuk enthält, die aus der Gruppe ausgewählt sind, die aus Kautschuken auf Isoprenbasis, Butadien-Kautschuk (BR), Styrol-Isopren-Butadien-Kautschuk (SIBR), Acrylnitril-Butadien-Kautschuk (NBR), Chloropren-Kautschuk (CR) und Isobutylen-Isopren-Kautschuk (IIR) besteht.

6. Vulkanisierte Kautschukzusammensetzung nach einem der Ansprüche 1 bis 5, wobei das Harz zumindest ein Harz ist, das aus der Gruppe ausgewählt ist, die aus C5-Harzen, C9-Harzen, Limonen-Harzen, $\alpha$-Pinen-Harzen, $\beta$-Pinen-Harzen, Terpen-Phenol-Harzen, Dicyclopentadien-Harzen, Styrol-Harzen, $\alpha$-Methylstyrol-Harzen, Cumaron-Harzen, Inden-Harzen, Phenol-Harzen, 4-tert-Butylstyrol-Harzen und Kolophonium (bzw. Terpentinharz) besteht.

7. Vulkanisierte Kautschukzusammensetzung nach einem der Ansprüche 1 bis 5, wobei das Harz einen aromatischen Ring aufweist.

8. Die vulkanisierte Kautschukzusammensetzung nach einem der Ansprüche 1 bis 7, wobei die vulkanisierte Kautschukzusammensetzung ferner Siliciumoxid enthält.

9. Reifen mit einer Lauffläche, in der die vulkanisierte Kautschukzusammensetzung nach einem der Ansprüche 1 bis 8 verwendet wird.

## Revendications

1. Composition de caoutchouc vulcanisé contenant du caoutchouc de styrène-butadiène et une résine, dans laquelle

la quantité du caoutchouc de styrène-butadiène contenu dans 100 % en masse du composant caoutchouc est de 10 à 100 % en masse,

5 à 200 parties en masse de la résine sont contenues par 100 parties en masse du composant caoutchouc, et quand une mesure de transmission par spectroscopie infrarouge à transformée de Fourier est effectuée tant avant qu'après extraction à l'acétone, un pic aux alentours de 1600 cm$^{-1}$ est décalé d'au moins 0,6 cm$^{-1}$ entre avant et après l'extraction à l'acétone.

2. Composition de caoutchouc vulcanisé selon la revendication 1, dans laquelle, dans la mesure, le pic aux alentours de 1600 cm$^{-1}$ est décalé d'au moins 0,7 cm$^{-1}$.

3. Composition de caoutchouc vulcanisé selon la revendication 1, dans laquelle, dans la mesure, le pic aux alentours de 1600 cm$^{-1}$ est décalé d'au moins 0,8 cm$^{-1}$.

4. Composition de caoutchouc vulcanisé selon l'une quelconque des revendications 1 à 3, dans laquelle le caoutchouc de styrène-butadiène est un caoutchouc de styrène-butadiène modifié.

5. Composition de caoutchouc vulcanisé selon l'une quelconque des revendications 1 à 4, laquelle composition de caoutchouc vulcanisé contient en outre un, deux ou plus de deux composants caoutchouc autres que le caoutchouc de styrène-butadiène et choisis dans le groupe constitué par les caoutchoucs à base d'isoprène, le caoutchouc de butadiène (BR), le caoutchouc de styrène-isoprène-butadiène (SIBR), le caoutchouc d'acrylonitrile-butadiène (NBR), le caoutchouc de chloroprène (CR), et le caoutchouc d'isobutylène-isoprène (IIR).

6. Composition de caoutchouc vulcanisé selon l'une quelconque des revendications 1 à 5, dans laquelle la résine est au moins une résine choisie dans le groupe constitué par les résines en C5, les résines en C9, les résines de limonène, les résines d'$\alpha$-pinène, les résines de $\beta$-pinène, les résines de terpène-phénol, les résines de dicyclopentadiène, les résines de styrène, les résines d'$\alpha$-méthylstyrène, les résines de coumarone, les résines d'indène, les résines de phénol, les résines de 4-tert-butylstyrène, et les colophanes.

7. Composition de caoutchouc vulcanisé selon l'une quelconque des revendications 1 à 5, dans laquelle la résine a un cycle aromatique.

8. Composition de caoutchouc vulcanisé selon l'une quelconque des revendications 1 à 7, laquelle composition de caoutchouc vulcanisé contient en outre de la silice.

9. Pneu ayant une bande de roulement dans laquelle la composition de caoutchouc vulcanisé selon l'une quelconque des revendications 1 à 8 est utilisée.

**REFERENCES CITED IN THE DESCRIPTION**

**Patent documents cited in the description**

- JP 2011099080 A